(19) Europäisches Patentamt
European Patent Office
Office européen des brevets

(11) Publication number : 0 331 266 B1

(12) # EUROPEAN PATENT SPECIFICATION

(45) Date of publication of patent specification : **06.05.92 Bulletin 92/19**

(51) Int. Cl.$^5$ : **C09D 133/00**

(21) Application number : **89200496.1**

(22) Date of filing : **28.02.89**

(54) **Coating composition.**

(30) Priority : **29.02.88 JP 48413/88**
**24.03.88 JP 71147/88**

(43) Date of publication of application : **06.09.89 Bulletin 89/36**

(45) Publication of the grant of the patent : **06.05.92 Bulletin 92/19**

(84) Designated Contracting States : **DE FR GB**

(56) References cited : **EP-A- 0 286 454**

(73) Proprietor : **NIPPON PAINT CO., LTD.**
**1-2, Oyodokita 2-chome Kita-ku**
**Osaka-shi (JP)**

(72) Inventor : **Takagawa, Ryozo**
**2-5-305, Kamishinden 3-chome**
**Toyonaka-shi Osaka-fu (JP)**
Inventor : **Tanabe, Hisaki**
**B-40-508, 1, Otokoyama Ishishiro**
**Yawata-shi Kyoto-fu (JP)**
Inventor : **Ohsugi, Hiroharu**
**1-1-111, Nishimakino 4-chome**
**Hirakata-shi Osaka-fu (JP)**
Inventor : **Eguchi, Yoshio**
**1-10-2, Sumiyoshi**
**Ikeda-shi Osaka-fu (JP)**
Inventor : **Asakura, Koji**
**4-15-1, Kishibekita**
**Suita-shi Osaka-fu (JP)**

(74) Representative : **Smulders, Theodorus A.H.J., Ir. et al**
**Vereenigde Octrooibureaux Nieuwe Parklaan 97**
**NL-2587 BN 's-Gravenhage (NL)**

EP 0 331 266 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

Field of the invention

The present invention relates to a coating composition and more specifically, it concerns a coating composition whose resinous content is far higher than those of conventional compositions and which is highly reactive for crosslinking and is particularly useful as a top coat for automobile body, appliances and the like. The inventive coating composition is also applicable as an intermediate coating.

Background of the invention

Heretofore, as a top coat for automobile body, appliances, decorative articles and the like, has been widely used a coating composition comprising a film-forming polymer, an organic solvent, a crosslinking agent and a curing catalyst as main ingredients. In such a coating composition, attentions are always directed to workability, finishing appearance of the coating like smoothness and gloss, and desired properties of the coating.

A high solid coating composition is particularly important in an automobile industry. In order to obtain a high solid coating composition based on a polyester resin, a measure is taken to lower the molecular weight of the resin. An alternative means is to incorporate the so-called soft monomer into the resin. In either case, the attainable volume non-volatile content of the coating composition is at most 50 to 52%. Further increase in the non-volatile content of the composition will cause the deterioration in finish appearance and film properties and hence, is not desired in a coating composition for automobile use.

In an acrylic paint, it is likewise contemplated to increase the non-volatile content of the composition by lowering the molecular weight (to the level of about 1000 -2000) or glass transition point of the acryl resin. However, the maximum volume non-volatile content attainable by that means is 45 to 50% in a clear paint and 40 to 45% in a colored base coating composition. Further increase in nonvolatile content is not desired because of the marked loss in the desirable film properties. A device is also made to make a blend of a polyester resin or an acrylic resin with other low viscous resin. However, no fruitful results are obtained in that case because of the undesirable lowering in film properties , incompatibility and the like.

It is, therefore, an object of the invention to provide a coating composition having a far higher solid content than those of the heretofore known coating compositions and being specifically useful as an intermediate coat as well as a top coat for automobile body and the like, without the fear of undesired sagging.

Summary of the invention

According to the invention, the abovementioned objects can be attained with a coating composition comprising

(a) a film-forming polymer having a functional group which is reactive with the under-mentioned crosslinking agent,

(b) an organic liquid diluent,

(c) a crosslinking agent, and

(d) polymer microparticles which are insoluble in the combination of said (a), (b) and (c) and stably dispersed therein, which is characterized by that said film-forming polymer is an acrylic homo- or co-polymer having at least one side chain of the formula:

$$-\overset{\overset{\displaystyle O}{\|}}{C}-(OCH_2CH_2CH_2CH_2)_n-OH$$

in which n is a positive number of 3 to 50, and said polymer microparticles are crosslinked polymer microparticles prepared by effecting polymerization of two or more $\alpha,\beta$-ethylenically unsaturated monomers in an aqueous or organic reaction medium in the presence of a resin having in its molecule a group of the formula:

$$-\overset{|}{N}-R-Y$$

in which R represents a substituted or unsubstituted $C_1$-$C_6$ alkylene or phenylene group, and Y is -COOH or $-SO_3H$.

Vinyl monomers which can be used for the preparation of the film-forming polymers referred to above as well as vinyl resins prepared therefrom are described in applicant's earlier EP-A-0 286 454.

The preparation of the film-forming polymer can be carried out by the following method:

(1) An acrylic monomer having oxytetramethylene repeating units and an end hydroxyl group, represented by the formula:

$$CH_2=\overset{R}{\overset{|}{C}}-CO-(OCH_2CH_2CH_2CH_2)_n-OH$$

in which R is hydrogen or methyl group, and n is a number of 3 to 50,
is first prepared by the method wherein tetrahydrofuran is subjected to a ring-opening polymerization in the presence of (meth) acrylic acid halide and metallic salt of Lewis acid, and the reaction is stopped by the addition of water, aqueous alkali solution or quarternary ammonium hydroxide, or the method wherein tetrahydrofuran is subjected to a ring-opening polymerization in the presence of a strong protonic acid and the reaction is stopped by the addition of metallic salt of (meth) acrylic acid or amine salt of (meth) acrylic acid, and
(2) 20 to 100 mole % of the abovementioned monomer and 80 to 0 mole% of other α, β-ethylenically unsaturated monomer are then polymerized in a conventional way to give
an acrylic resin having a number average molecular weight of 1000 to 10,000, which is used as a film-forming polymer.

In the above-mentioned monomer preparation, as a (meth)-acrylic acid halide, use is made of such members as acrylic acid chloride, acrylic acid bromide, methacrylic acid chloride, methacrylic acid bromide and the like. Examples of metallic salt of Lewis acid are silver antimony hexa-fluoride, silver fluoroborate silver perchlorate and the like.

The reaction may be carried out in a conventional way, as, for example, desired amounts of tetrahydrofuran are dropwise added to a solution of (meth) acrylic acid halide and metallic salt of Lewis acid, under stirring and heating, and the reaction is stopped, when reached desired polymerization degree, by the addition of water, aqueous alkali solution or quaternary ammonium hydroxide. Examples of aqueous alkali solution are water solutions of such alkaline material as sodium hydroxide, potassium hydroxide, lithium hydroxide, calcium hydroxide and the like, and examples of quaternary ammonium hydroxide are tetramethylammonium hydroxide, tetraethylammonium hydroxide and the like. In the above-mentioned reaction, a non-reactive solvent as dichloromethane may be used as desired.

In the second method, the desired monomer may be prepared by first effecting ring-opening polymerization of tetrahydrofuran in the presence of a strong protonic acid and then stopping the reaction by metallic salt of (meth) acrylic acid or amine salt of (meth)-acrylic acid. As the strong protonic acid, use is made of such members as trifluoromethane sulfonic acid, trichloromethane sulfonic acid, perchloric acid, hydrofluoric acid, sulfuric acid, chlorosulfonic acid, fluorosulfonic acid and the like.

Such protonic acid may be used together with Lewis acid as antimony pentafluoride and the like, if desired. Examples of metallic salt of (meth) acrylic acid are sodium, potassium, lithium, magnesium, calcium, barium, strontium salts of acrylic or methacrylic acid, and examples of amine salt of (meth) acrylic acid are ammonium salt of acrylic acid, ammonium salt of methacrylic acid and the like.

The reaction may be carried out in a conventional way as in the above-mentioned first method.

Thus obtained monomer is not a single compound , but rather a mixture of different monomers each having different number of oxytetramethylene repeating units, since the monomer is prepared by the ring-opening polymerization of tetrahydrofuran. However, as the starting material for the preparation of acrylic polymer, it is almost meaningless to separate and purify the respective components and such is not preferred from the standview of protection of polymerizable vinyl group. Therefore, it is enough for the object of the invention to take the meaning of the term "n" as an average repeating unit number of oxytetramethylene chain. For the present objects, the said "n" should be 3 or more. With the increase in "n" number, the polymer may become more and more solid at room temperature and hardly soluble in a solvent. Therefore, from the practical stand of view, the upper limit of "n" is fixed to about 100. Preferable range of said "n" is 3 to 50, as claimed in the invention.

The film-forming polymer used in the present invention is prepared by the polymerization of 20 to 100 mole% of the monomer of the formula:

$$CH_2=\overset{R}{\overset{|}{C}}-CO-(OCH_2CH_2CH_2CH_2)_n-OH$$

(in which R is hydrogen or methyl group, n is a number of 3 to 50) and 80 to 0 mole% of other α,β-ethylenically unsaturated monomer. The polymerization may be carried out in either way of emulsion polymerization, solution polymerization, NAD method and the like, and however, since the present coating composition is a solvent type composition, it is preferred to effect the abovementioned polymerization by the solution polymerization or NAD polymerization means using the same organic liquid diluent as used in the present coating composition or an organic liquid medium compatible with said organic diluent. The number average molecular weight of thus prepared acrylic polymer should preferably be in a range of about 1000 to 10,000 for the object of this invention.

The present film-forming polymer is characterized by having at least one oxytetramethylene side chain of soft structure and highly reactive end hydroxyl group. Therefore, desired flexibility and crosslink reactivity are given to the polymer .Moreover, since the "n" value is limited to 3 to 50, the polymer has a highly desirable low viscosity and can result a coating with excellent elasticity.

The organic liquid diluent and the crosslinking agent present in the coating composition are not of specific type and any of the members customarily used in a solvent type coating composition may satisfactorily be used in this invention.

Examples of organic liquid diluent are aromatic hydrocarbons as xylene, toluene and the like, aliphatic hydrocarbons, esters, ketones, alcohols or mixture thereof.

Examples of crosslinking agent are aminoplast resins as, alkyl etherified melamines (e.g. butoxymethyl melamine, methoxymethyl melamine, methoxy- butoxy methyl melamine and the like), urea resin and the like, polyisocyanate compounds, blocked polyisocyanate compounds and the like. If desired, a curing catalyst may be added in an amount of 0.1 to 10 parts per 100 parts of the combination of said film-forming polymer and crosslinking agent. Examples of the curing catalyst are strong protonic acids as paratoluenesulfonic acid, dodecylbenzene sulfonic acid and the like, and organic amine salts thereof, and organo-metallic compounds as dibutyl tin dilaurate, dibutyl tin oxide and the like.

The present coating composition may be used as a clear coat or as a color base coat. In the latter, the composition may be added with metallic or non-metallic pigment. If desired, the present coating composition may further contain surface conditioner, UV absorber, antioxidant and other additives.

As already stated, since the film-forming polymer has a low viscosity, excellent crosslinking reactivity and a high elasticity, the coating composition can be formulated in a very high solid content, as high as 55 to 65% in terms of volume of the non-volatile content, and is highly reactive in crosslinking, resulting in a coating with excellent finish appearance and film properties. Therefore, the composition is specifically useful as a top coat for automobile body, appliances and the like. As the results of extensive studies, the inventors have found that when a particular type of polymer microparticles is compounded with the abovementioned coating composition, the resinous content of the composition is greatly increased and the thus obtained composition is very useful as not only a top coat, but also an intermediate coat, without the fear of undesired sagging.

The polymer microparticles as used in this invention are crosslinked polymer microparticles stated in Japanese Patent Publication (unexamined) No. Sho 58-129066, prepared by the method wherein two or more of α,β -ethylenically unsaturated monomers are copolymerized in an aqueous or organic medium in the presence of a resin having in its molecule a group represented by the formula:

$$\overset{|}{-N}-R-Y$$

in which R is a substituted or unsubstituted $C_1$ to $C_6$ alkylene or phenylene group, and Y is -COOH or $-SO_3H$. In that method, since a particular amphoionic group bearing resin is used as an emulsifier or dispersing acid, the polymer microparticles are necessarily obtained in the form being adhered with such resin. This resin component can exhibit a specific role of assisting the stable dispersion of the polymer microparticles in the coating composition. No particular modification of microparticle surface is required in contrast with the heretofore known microparticles used in a high solid coating composition.

The compounding ratio of the essential components may widely vary with the intended use and however, it is generally determined in the following weight ratio.

That is, the polymer component consists of 50 to 99.5 parts by weight (in solid) of the film-forming polymer and 50 to 0.5 parts of the crosslinked polymer microparticles, the amount of crosslinking agent is usually in a rang of 5 to 100 parts per 100 parts of the combined amount of said film-forming polymer and crosslinked polymer microparticles, and the amount of organic liquid diluent is 10 to 2000 parts per 100 parts of the combination of said film-forming polymer, crosslinked polymer microparticles and crosslinking agent.

According to the invention a far higher resinous content of the coating composition can be attained without

the fear of any increase in viscosity and troublesome sagging. Therefore, the said composition is quite ideal for intermediate coating use, as well as a top coat. The invention shall be now more fully explained in the following Examples. Unless otherwise stated, all parts and percentages are by weight.

Preparation of monomers represented by the formula:

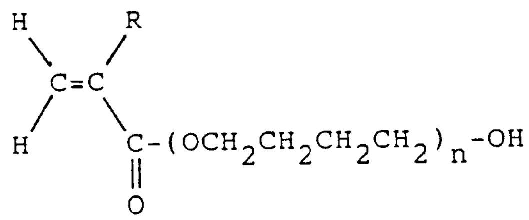

in which R is H or $CH_3$; and n is a positive number of 3 to 50.

Manufacturing Example 1

Into a well dried 3 liters flask, after having flashed with a highly purified and dried ($H_2O$ 1ppm or less) nitrogen gas, were placed 1380 parts of tetrahydrofuran (THF) and 73.8 parts of silver antimony hexafluoride and the mixture was cooled ,under stirring, to -40°C. While maintaining the same temperature, a solution of 22.5 parts of methacrylic acid chloride in 180 parts of THF was added and the combined mixture was reacted at the same temperature for 180 minutes. Then, 450 parts of deionized water were added to stop the reaction. The reaction mixture was taken in a dropping funnel, added with ether and then with deionized water, vigorously shaked and allowed to stand. The aqueous phase was removed off and the residue was washed with water several times to obtain an ether phase.

After drying with anhydrous sodium sulfate, ether solvent was distilled off in vaccuo at 20°C to obtain a monomer (a-1).

THF average polymerization degree (n) of this monomer (a1) was 6 (measured and determined by IR and $^1$H-NMR).

Manufacturing Example 2

The same experiments as stated in Manufacturing Example 1 were repeated excepting revising the reaction conditions to "-20°C for 10 minutes", to obtain a monomer (a-2). THF average polymerization degree (n) of this monomer was 10.

Preparation of film-forming polymer:

Manufacturing Example 3

Into a reaction vessel fitted with a stirrer, a thermometer, a reflux condenser, a nitrogen gas inlet tube and a dropping funnel, were placed 90 parts of Solvesso-100 (aromatic solvent, trademark, Esso Standard) and heated ,while introducing a nitrogen gas, to 150°C. While maintaining the same temperature, a mixture of 60 parts of monomer (a-1), 40 parts of methyl methacrylate and 5 parts of t-butylperoxy-2-ethylhexanoate was drop-wise added at a constant speed in 3 hours and after completion of said addition, the combined mixture was maintained at the same temperature for 30 minutes. Thereafter, a mixture of 0.5 part of t-butylperoxy-2-ethylhexanoate and 10 parts of Solvesso-100 was added and the combined was maintained at 150°C for 1 hour and then allowed to cool. The mixture was subjected to a solvent evaporation and a resinous solution of defined solid content (A-1) was obtained. The characteristics of thus obtained resin and resinous solution (A) are shown in Table 2.

Manufacturing Examples 4 to 7

The similar experiments as stated in Manufacturing Example 3 were repeated using the materials and temperatures shown in Table 1 to obtain resinous solutions A-2 to A-5. The characteristics of these resins and resinous solutions are shown in Table 2.

Table 1

| Manuf. Example | 3 | 4 | 5 | 6 | 7 |
|---|---|---|---|---|---|
| resinous solution | A-1 | A-2 | A-3 | A-4 | A-5 |
| monomers used: | | | | | |
| monomer a-1 | 60 | 80 | | | 60 |
| monomer a-2 | | | 100 | 70 | |
| methylmethacrylate | 40 | 20 | | 15 | |
| 2-ethylhexyl acrylate | | | | 15 | |
| styrene | | | | | 20 |
| n-butylmethacrylate | | | | | 20 |
| initiator: | | | | | |
| t-butylperoxy-2-ethylhexanoate | 5.5 | 5.5 | 5.5 | 5.5 | 5.5 |
| solvent: | | | | | |
| Solvesso-100 | 100 | 100 | 100 | 100 | 100 |
| polymerization temperature (°C) | 150 | 150 | 150 | 150 | 150 |
| mole % of monomer a | 23.0 | 44.4 | 100 | 33.6 | 23.0 |

Table 2

| Resin. solution | A-1 | A-2 | A-3 | A-4 | A-5 |
|---|---|---|---|---|---|
| non-volatile content (%) | 90 | 90 | 90 | 90 | 90 |
| viscosity | V | U-V | U | T | S |
| number average molecular weight* | 2100 | 4500 | 2300 | 2900 | 2200 |

*..measured by gel permeation chromatography

Manufacturing Example 8

(A) Preparation of polyester resin having amphoionic groups:

Into a 2 liters flask fitted with a stirrer, a nitrogen gas inlet tube, a thermoregulator, a condenser, and a decanter, were placed 134 parts of hydroxyethyl taurine, 130 parts of neopentylglycol, 236 parts of azelaic acid, 186 parts of phthalic anhydride and 27 parts of xylene, and the mixture was heated while removing the formed water azeotropically with xylene.The temperature was raised to 190°C in 2 hours from the commencement of reflux and the reaction was continued until the resinous acid value based on carboxyl groups reached 145, while continuing stirring and dehydration. Then, the mixture was allowed to cool to 140°C. To this, 314 parts of Cardula E-10 (glycidyl versatate, trademark of Shell Chem.) were dropwise added while keeping the temperature at 140°C in 30 minutes, the then stirring was continued for 2 hours. Thus obtained polyester resin had an acid value of 59, a hydroxyl value of 90 and number average molecular weight of 1054.

(B) Preparation of polymer microparticles:

Into a One liter reaction vessel fitted with a stirrer, a condenser, and a thermoregulator, were placed 282 parts of deionized water, 10 parts of the polyester resin obtained in said (A) and 0.75 part of dimethylethanolamine, and the mixture was melted at 80°C under stirring. To this, were added a solution of 4.5 parts of azobiscyanovaleric acid in 4.5 parts of deionized water and 4.3 parts of dimethylethanolamine, and then dropwisely a mixture of 70.7 parts of methyl methacrylate, 94.2 parts of n-butyl acrylate, 70.7 parts of styrene, 30 parts of 2-hydroxyethylacrylate and 4,5 parts of ethyleneglycol dimethacrylate in 60 minutes. After completion of said addition, a solution of 1.5 parts of azobiscyanovaleric acid in 15 parts of deionized water and 1.4 parts of dimethylethanolamine was added and the combined was stirred at 80°C for 60 minutes to obtain an emulsion having a solid content of 45%, pH 7.2 , viscosity 92 cps (25°C) average particle diameter 0.156 μm.

The emulsion was then subjected to a spry drying to obtain polymer microparticles C-1.

Manufacturing Example 9

(A) Preparation of modified epoxy resin having amphoionic groups:

Into a similar reaction vessel as used in Manufacturing Example 8, were placed 73.5 parts of sodium salt of taurine, 100 parts of ethyleneglycol and 200 parts of ethyleneglycol monomethylether, and the mixture was while stirring heated to 120°C. At the stage when a uniform melt was obtained, a solution of 470 parts of Epicoat 1001 (trademark, bisphenol A diglycidyl ether type epoxy resin, epoxy equivalent 470) in 400 parts of ethyleneglycol was dropwise added in 2 hours. After completion of said addition, stirring and heating were continued for 20 hours.

After purification and drying, 518 parts of modified epoxy resin having an acid value of 49.4 were obtained.

(B) Preparation of polymer microparticles:

Into a stainless steel vessel, were placed 200 parts of deionized water and 0.2 part of triethylamine, and while stirring, 5 parts of the modified epoxy resin obtained in the preceeding paragraph A were added and the temperature of thus obtained mixture was raised to 70°C and strring was continued for 10 minutes. Thus obtained slightly turbid aqueous solution was placed in a reaction vessel as used in Manufacturing Example 8, and 106 parts of deionized water were added and temperature was maintained at 80°C while continuing stirring. To this, a mixture of 4.5 parts of azobiscyanovaleric acid, 4.9 parts of triethylamine and 45 parts of deionized water was added and then, while maintaining the temperature at 80°C, a mixture of 150 parts of methylmethacrylate, 142 parts of n-butylacrylate, 1.8 parts of glycidylmethacrylate and 1.2 parts of methacrylic acid was dropwise added in 120 minutes. Thereafter, while keeping the same temperature, an aqueous solution of 1.5 parts of azobiscyanovaleric acid, 1.5 parts of triethylamine and 15 parts of deionized water was added and the combined was stirred for 60 minutes to obtain an emulsion having a solid content of 45 %, pH 7.2, viscosity 69cps (25°C) and average particle diameter 0.172 μm. The emulsion was subjected to a spray drying to obtain polymer microparticles C-2.

Example 1

Into a stainless steel vessel, were placed the following and the combined was stirred well in a laboratory mixer to obtain a coating composition.

| composition | Examp.1 | comparison |
|---|---|---|
| polymer microparticles C-1 | 1 | - |
| resinous solution A-1 | 94 | 94 |
| Cymel 303 | 36 | 36 |
| rutile type titanium dioxide | 81 | 81 |
| toluene | 12 | 12 |
| n-butanol | 12 | 12 |
| Modaflow | 0.2 | 0.2 |
| p-toluenesulfonic acid triethylamine salt | 2.4 | 2.4 |

When the said respective composition was diluted with a mixed solvent of butylacetate/xylene/Solvesso-100=2/2/1 to a #4 Ford Cup viscosity of 23 seconds(20°C), the volume solid content of the composition of Example 1 was 61%, whereas the volume solid content of the composition of said comparison was 60%. When applied by spraying means, the maximum film thickness without sagging of the present coating composition was 48 μm and the corresponding value of the comparison was 34 μm.

Example 2

The same procedures as stated in Example 1 were repeated with the following composition.

| composition | Examp.2 | comparison |
|---|---|---|
| polymer microparticles C-1 | 1 | - |
| resinous solution A-2 | 94 | 94 |
| Cymel 303 | 36 | 36 |
| rutile type titanium dioxide | 81 | 81 |
| toluene | 12 | 12 |
| n-butanol | 12 | 12 |
| Modaflow | 0.2 | 0.2 |
| p-toluenesulfonic acid triethylamine salt | 2.4 | 2.4 |

When the said respective composition was diluted with a mixed solvent of butylacetate/xylene/Solvesso-100=2/2/1 to a #4 Ford Cup viscosity of 23 seconds(20°C), the volume solid content of the composition of Example 2 was 59%, whereas the volume solid content of the composition of said comparison was 58%. When applied by spraying means, the maximum film thickness without sagging of the present coating composition was 49 μm and the corresponding value of the comparison was 35 μm.

Example 3

The same procedures as stated in Example 1 were repeated with the following composition.

| composition | Examp.3 | comparison |
|---|---|---|
| polymer microparticles C-1 | 1 | - |
| resinous solution A-3 | 94 | 94 |
| Cymel 303 | 36 | 36 |
| rutile type titanium dioxide | 81 | 81 |
| toluene | 12 | 12 |
| n-butanol | 12 | 12 |
| Modaflow | 0.2 | 0.2 |
| p-toluenesulfonic acid triethylamine salt | 2.4 | 2.4 |

When the said respective composition was diluted with a mixed solvent of butylacetate/xylene/Solvesso-100=2/2/1 to a #4 Ford Cup viscosity of 23 seconds(20°C), the volume solid content of the composition of Example 3 was 60%, whereas the volume solid content of the composition of said comparison was 59%. When applied by spraying means, the maximum film thickness without sagging of the present coating composition was 47 μm and the corresponding value of the comparison was 33 μm.

Example 4

The same procedures as stated in Example 1 were repeated with the following composition.

| composition | Examp. 4 | comparison |
|---|---|---|
| polymer microparticles C-1 | 2 | - |
| resinous solution A-4 | 107 | 107 |
| Cymel 303 | 24 | 24 |
| Alpaste 1109MA | 18 | 18 |
| toluene | 12 | 12 |
| n-butanol | 6 | 6 |
| butylacetate | 6 | 6 |
| Modaflow | 0.2 | 0.2 |
| p-toluenesulfonic acid triethylamine salt | 2.4 | 2.4 |

When the said respective composition was diluted with a mixed solvent of ethylacetate/toluene/Solvesso-100=3/5/2 to a #4 Ford Cup viscosity of 23 seconds(20°C), the volume solid content of the composition of Example was 60%, whereas the volume solid content of the composition of said comparison was 59%. When applied by spraying means, the maximum film thickness without sagging of the present coating composition was 45 μm and the corresponding value of the comparison was 34 μm.

Example 5

The same procedures as stated in Example 1 were repeated with the following composition.

| composition | Examp. 5 | comparison |
|---|---|---|
| polymer microparticles C-2 | 2 | - |
| resinous solution A-5 | 94 | 94 |
| Cymel 303 | 36 | 36 |
| n-butanol | 6 | 6 |
| Solvesso-100 | 24 | 24 |
| Modaflow | 0.2 | 0.2 |
| p-toluenesulfonic acid triethylamine salt | 2.4 | 2.4 |

When the said respective composition was diluted with a mixed solvent of Solvesso-100/Solvesso-150=2/1 to a #4 Ford Cup viscosity of 27 seconds(20°C), the volume solid content of the composition of Example 5 was

62%, whereas the volume solid content of the composition of said comparison was 61%. When applied by spraying means, the maximum film thickness without sagging of the present coating composition was 50 μm and the corresponding value of the comparison was 38 μm.

Example 6

The same procedures as stated in Example 1 were repeated with the following composition.

| composition | Examp. 6 | comparison |
|---|---|---|
| polymer microparticles C-2 | 2 | - |
| resinous solution A-1 | 94 | 94 |
| Cymel 303 | 36 | 36 |
| rutile type titanium dioxide | 81 | 81 |
| toluene | 12 | 12 |
| n-butanol | 12 | 12 |
| Modaflow | 0.2 | 0.2 |
| p-toluenesulfonic acid triethylamine salt | 2.4 | 2.4 |

When the said respective composition was diluted with a mixed solvent of butylacetate/xylene/Solvesso-100=2/2/1 to a #4 Ford Cup viscosity of 23 seconds(20°C), the volume solid content of the composition of Example 6 was 61%, whereas the volume solid content of the composition of said comparison was 60%. When applied by spraying means, the maximum film thickness without sagging of the present coating composition was 48 μm and the corresponding value of the comparison was 34 μm.

Example 7

The same procedures as stated in Example 1 were repeated with the following composition.

| composition | Examp. 7 | comparison |
|---|---|---|
| polymer microparticles C-1 | 1 | - |
| resinous solution A-1 | 94 | 94 |
| Sumidule N-3200 * | 20 | 20 |
| rutile type titanium dioxide | 78 | 78 |
| toluene | 12 | 12 |
| butylacetate | 12 | 12 |
| Modaflow | 0.2 | 0.2 |

When the said respective composition was diluted with a mixed solvent of butylacetate/xylene/Solvesso-100=2/2/1 to a #4 Ford Cup viscosity of 23 seconds(20°C), the volume solid content of the composition of

Example 7 was 62%, whereas the volume solid content of the composition of said comparison was 61%. When applied by spraying means, the maximum film thickness without sagging of the present coating composition was 48 μm and the corresponding value of the comparison was 34 μm.
*..Burette type polyisocyanate, trademark of Sumitomo Bayer K.K.

## Claims

1. A coating composition comprising
(a) a film-forming polymer having a functional group which is reactive with the under-mentioned crosslinking agent,
(b) an organic liquid diluent,
(c) a crosslinking agent , and
(d) polymer microparticles which are insoluble in the combination of said (a),(b) and (c) and stably dispersed therein, which is characterized by that said film-forming polymer is an acrylic homo - or co-polymer having at least one side chain of the formula:

$$-\overset{\overset{\large O}{\|}}{C}-(OCH_2CH_2CH_2CH_2)_n-OH$$

in which n is a positive number of 3 - 50 ,and said polymer microparticles are crosslinked polymer microparticles prepared by effecting polymerization of two or more α, β-ethylenically unsaturated monomers in an aqueous or organic reaction medium in the presence of a resin having in its molecule a group of the formula:

$$-\overset{|}{N}-R-Y$$

in which R represents a substituted or unsubstituted $C_1$-$C_6$ alkylene or phenylene group , and Y is -COOH or $-SO_3H$.

2. A coating composition according to claim 1 wherein the weight ratio of said film-forming polymer to said polymer microparticles is 50-995 to 50-05, the amount of crosslinking agent is 5-100 parts by weight per 100 parts by weight of the combination of said film-forming polymer and said polymer microparticles and the amount of said organic liquid diluent is 10 to 2000 parts by weight per 100 parts by weight of the combination of said film-forming polymer, polymer microparticles and crosslinking agent.

## Patentansprüche

1. Beschichtungszusammensetzung, umfassend
(a) ein filmbildendes Polymer mit einer funktionellen Gruppe, welche mit dem im folgenden genannten Vernetzungsmittel reagiert,
(b) ein organisches, flüssiges Verdünnungsmittel,
(c) ein Vernetzungsmittel, und
(d) polymere Mikropartikel, welche in der Kombination aus den Verbindungen (a), (b) und (c) unlöslich und darin stäbil dispergiert sind, das dadurch gekennzeichnet ist, daß das filmbildende Polymer ein Acryl-homo- oder copolymer mit wenigstens einer Seitenkette der Formel

$$-\overset{\overset{\large O}{\|}}{C}-(OCH_2CH_2CH_2CH_2)_n-OH$$

ist, worin n einen positiven Wert von 3 - 50 einnimmt, und wobei die polymeren Mikropartikel vernetzte polymere Mikropartikel sind, die dadurch hergestellt werden, daß man eine Polymerisation von zwei oder mehr

α,ß-ethylenisch ungesättigten Monomeren in einem wäßrigen oder organischen Reaktionsmedium in Gegenwart eines Harzes durchführt, das in seinem Molekül eine Gruppe der Formel

$$-\overset{|}{N}-R-Y$$

aufweist, worin R für eine substituierte oder unsubstituierte $C_1$-$C_6$ Alkylen- oder Phenylengruppe steht und Y für -COOH oder -$SO_3H$ steht.

2. Beschichtungszusammensetzung nach Anspruch 1, worin das Gewichtsverhältnis von dem filmbildenden Polymer zu den polymeren Mikropartikeln 50-99,5 bis 50-0,5 beträgt, die Menge des Vernetzungsmittels 5-100 Gewichtsteile je 100 Gewichtsteile der Kombination aus filmbildenden Polymer und polymeren Mikropartikeln beträgt und die Menge des organischen,flüssigen Verdünnungsmittels 10 bis 2 000 Gewichtsteile je 100 Gewichtsteile der Kombination aus filmildendem Polymer, polymeren Mikropartikeln und Vernetzungsmittel beträgt.

## Revendications

1. Une composition de revêtement comprenant :
(a) un polymère filmogène ayant un groupe fonctionnel qui est réactif avec l'agent réticulant mentionné ci-après,
(b) un diluant liquide organique,
(c) un agent réticulant, et
(d) des microparticules de polymère qui sont insolubles dans la combinaison desdits (a), (b) et (c) et qui y sont dispersées de façon stable, qui est caractérisée en ce que ledit polymère filmogène est un homo- ou un co-polymère acrylique ayant au moins une chaîne latérale de formule :

$$-\overset{O}{\overset{||}{C}}-(OCH_2CH_2CH_2CH_2)_n-OH$$

dans laquelle n est un nombre positif de 3 - 50, et lesdites microparticules de polymère sont des microparticules de polymère réticulé préparées par polymérisation de deux ou de plus de deux monomères α,β-éthyléniquement insaturés dans un milieu de réaction aqueux ou organique en présence d'une résine ayant dans sa molécule un groupe de formule :

$$-\overset{|}{N}-R-Y$$

dans laquelle R représente un groupe $C_1$-$C_6$ alkylène substitué ou non substitué ou un groupe phénylène, et Y est -COOH ou -$SO_3H$.

2. Une composition de revêtement selon la revendication 1, selon laquelle le rapport pondéral entre ledit polymère filmogène et lesdites microparticules de polymère est de 50-99,5 à 50-0,5, la quantité de l'agent réticulant est de 5-100 parties en poids pour 100 parties en poids de la combinaison dudit polymère filmogène et desdites microparticules de polymère et la quantité dudit diluant liquide organique est de 10 à 2 000 parties en poids pour 100 parties en poids de la combinaison dudit polymère filmogène, desdites microparticules de polymère et dudit agent réticulant.